# EUROPÄISCHE PATENTSCHRIFT

(11) **EP 4 256 695 B1**
(45) Veröffentlichungstag und Bekanntmachung des Hinweises auf die Patenterteilung: **12.08.2026**
(21) Anmeldenummer: 21806676.9
(22) Anmeldetag: 04.11.2021
(51) Int. Cl.: H02P 29/50

(54) **GERÄUSCHOPTIMIERUNG EINER ELEKTRISCHEN MASCHINE**
NOISE OPTIMIZATION OF AN ELECTRIC MACHINE
OPTIMISATION DU BRUIT DANS UNE MACHINE ÉLECTRIQUE

(30) Priorität: 01.12.2020 DE 102020215117
(43) Veröffentlichungstag der Anmeldung: 11.10.2023
(73) Patentinhaber: Robert Bosch GmbH, 70442 Stuttgart (DE)
(72) Erfinder: GERING, Stefan, 71287 Weissach (DE); GAENZLE, David, 70771 Leinfelden-Echterdingen (DE); MANDERLA, Maximilian, 71638 Ludwigsburg (DE)
(86) Internationale Anmeldenummer: PCT/EP2021/080595
(87) Internationale Veröffentlichungsnummer: WO 2022/117274

(56) Entgegenhaltungen:
- DE-A1- 102014 206 048
- DE-A1- 102015 211 499
- DE-A1- 102017 213 131

## Beschreibung

Die vorliegende Erfindung betrifft ein Verfahren zur Geräuschoptimierung einer maschinellen Vorrichtung, die eine elektrische Maschine umfasst, sowie eine Recheneinheit und ein Computerprogramm zu dessen Durchführung.

### Hintergrund der Erfindung

Elektrische Antriebe gewinnen durch die wachsende Elektromobilität zunehmend an Bedeutung. Einzelne Komponenten eines elektrischen Antriebs, wie die Spannungsversorgung, Leistungselektronik, die elektrische Maschine und das Getriebe werden dabei häufig separat anhand von zu erreichenden Kennzahlen ausgelegt. Im Zusammenspiel aller beteiligten Komponenten können jedoch unerwünschte Nebeneffekte auftreten, wie z.B. Störgeräusche aufgrund der Wechselwirkung zwischen den einzelnen Teilsystemen.

Eine gemeinsame Optimierung aller Komponenten wäre zwar eine denkbare Lösung, die aber aus Aufwands- und Kostengründen selten genutzt wird, oder auch aus Komplexitätsgründen sowie vorhandener Modellunsicherheiten nicht zielführend sein muss. Ein Beispiel einer solchen Situation ist die Geräuschbildung in einem elektrischen Antrieb. Auch wenn sich die elektrische Maschine allein unauffällig hinsichtlich Geräuschbildung verhält, so kann sie im verbauten Zustand durchaus unerwünschte Schwingungen anregen.

Die Druckschriften DE 10 2014 206 048 A1, DE 10 2015 211 499 A1, DE 10 2017 213 131 A1 offenbaren Verfahren zur Geräuschoptimierung einer maschinellen Vorrichtung.

### Offenbarung der Erfindung

Erfindungsgemäß werden ein Verfahren zur Geräuschoptimierung einer maschinellen Vorrichtung, die eine elektrische Maschine umfasst, sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Eine mögliche regelungstechnische Abhilfe für Geräuschprobleme kann darin bestehen, auf die geregelten sinusförmigen Ströme der elektrischen Maschine harmonische Oberwellen derart einzuprägen, dass das Störgeräusch unterdrückt bzw. im Idealfall gänzlich getilgt wird.

Sollen anhand der Stromregelung mehrere Frequenzen des Störgeräusches unterdrückt werden, so ist das Problem im allgemeinen unterbestimmt, d.h. es ist nicht möglich, alle Harmonischen beliebig genau zu unterdrücken. Stattdessen kann eine Gewichtung der einzelnen Harmonischen zueinander vorgenommen werden, um das Mehrzieloptimierungsproblem zu lösen. Im Allgemeinen werden so einzelne Harmonische stärker gedämpft als andere.

Die Erfindung ermöglicht für Arbeitspunkte der elektrischen Maschine, die durch eine Regelung geregelt wird, die eine harmonische Kompensationsregelung aufweist, eine effiziente Ermittlung individueller Arbeitspunkt-Kompensationsparameter für die Kompensationsregelung, so dass eine optimalen Geräuschentwicklung der maschinellen Vorrichtung, die die elektrische Maschine umfasst, erreicht wird.

Im Einzelnen werden dazu die folgenden Schritte ein oder mehrmals durchgeführt:
a) Auswählen eines Arbeitspunktes der elektrischen Maschine; mehrfache Durchführung der folgenden Schritte b) bis d):
b) Bestimmen von Kompensationsparametern der harmonischen Kompensationsregelung für den ausgewählten Arbeitspunkt, wobei bei der ersten Durchführung der Schritte b) bis d) anfängliche Kompensationsparameter bestimmt werden und bei den weiteren Durchführungen jeweils geänderte Kompensationsparameter basierend auf bestimmten Gütewerten bestimmt werden;
c) Betreiben der elektrischen Maschine, wobei die elektrische Maschine unter Verwendung der Kompensationsparameter geregelt wird;
d) Bestimmen eines Gütewertes entsprechend einer vorgegebenen Geräusch-Bewertungsskala basierend auf dem Maschinengeräusch während des Betriebs der elektrischen Maschine;
e) Festlegen von Arbeitspunkt-Kompensationsparametern für den ausgewählten Arbeitspunkt, wobei Kompensationsparameter einer Durchführung der Schritte b) bis d) verwendet werden, deren Gütewert sich um maximal eine Güteschranke von einem besten Gütewert der Durchführungen unterscheidet.

Dadurch, dass die Bestimmung der geänderten Kompensationsparameter in Schritt b) auf bereits für andere Kompensationsparameter bestimmten Gütewerten basiert, können Kompensationsparameter-Bereiche, in denen "schlechte" Gütewerte vorliegen, ausgeschlossen werden und die geänderten Kompensationsparameter so bestimmt bzw. gewählt werden, dass sie in der Nähe "guter" Gütewerte liegen, so dass in wenigen Durchläufen der Schritte b) bis d) Kompensationsparameter gefunden werden können, die einen vergleichsweise guten Gütewert aufweisen, also zu einem vergleichsweise optimalen Geräusch führen. Auf eine aufwendige Modellierung der Vorrichtung und des erzeugten Geräusches kann verzichtet werden.

Arbeitspunkte der elektrischen Maschine sind durch bestimmte Größen bzw. Steuergrößen, insbesondere durch Drehzahl ω und Drehmoment M der elektrischen Maschine, bestimmt. Die Kompensationsparameter sind insbesondere Gewichte für die harmonische Regelung, anhand derer die Gewichtung bzw. Größe der den geregelten sinusförmigen Strömen eingeprägten harmonischen Oberwellen (d.h. Wellen deren Frequenz ein ganzzahliges Vielfaches der Frequenz des geregelten sinusförmigen Stroms ist) bestimmt werden kann.

Was der "beste" Gütewert ist, ist abhängig von der verwendeten Geräusch-Bewertungsskala. Unter der Annahme, dass die Geräusch-Bewertungsskala eine Teilmenge der reellen Zahlen ist, ist das entweder der größte oder der kleinste Gütewert, je nachdem, wie die größere/kleinere Gütewerte auf der Geräusch-Bewertungsskala "schlechten" bzw. "guten" Geräuschen zugeordnet sind. Z.B. ist bei einem Lautstärkepegel der beste Gütewert der kleinste Lautstärkepegel.

Bevorzugt erfolgt die Bestimmung geänderter Kompensationsparameter in Schritt b) unter Verwendung eines Optimierungsverfahrens, insbesondere eines Gradientenverfahrens, wobei weiter bevorzugt die wiederholte Durchführung der Schritte b) bis d) beendet wird, wenn sich der Gütewert einer Durchführung oder die Gütewerte mehrerer aufeinanderfolgender Durchführungen um weniger als eine Gütelernschwelle von einem vorher besten Gütewert der vorherigen Durchführungen unterscheidet bzw. unterscheiden. Die Änderung der Kompensationsparameter kann beispielsweise basierend auf den bestimmten Gütewerten (Schritt e) unter Verwendung des Downhill-Simplex- bzw. Nelder-Mead-Verfahrens erfolgen.

Schritt d) umfasst ein Abfragen einer oder mehrerer Bewertungen des Geräusches innerhalb eines oder mehrerer kontinuierlicher und/oder diskreter Wertebereiche von einem menschlichen Benutzer; und ein Bestimmen des Gütewertes basierend auf den abgefragten Bewertungen; wobei beim Abfragen bevorzugt die Wertebereiche auf einer Anzeige angezeigt werden und die Bewertungen mittels eines Eingabegeräts vom Benutzer erhalten werden.

Ein solches interaktives Verfahren ist in zweierlei Hinsicht vorteilhaft. Erstens können so Geräuscheigenschaften berücksichtigt werden, die messtechnisch nicht erfasst oder charakterisiert werden können, für Menschen allerdings störend wirken. Zweitens kann eine benutzerspezifische Einstellung des Geräuschs erfolgen, eine Anpassung an das Hörvermögen des jeweiligen Benutzers ist also möglich.

Die abgefragten Bewertungen werden in geeigneter Weise auf die Geräusch-Bewertungsskala abgebildet, etwa mittels einer gewichteten Summenbildung. Als Anzeige und Eingabegerät kann beispielsweise ein Touchscreen verwendet werden oder ein Bildschirm und eine Tastatur und/oder Maus. Alternativ oder zusätzlich wäre eine Sprachsteuerung denkbar.

Bevorzugt werden beim Abfragen bestimmte Geräuschcharakteristika abgefragt, denen die Wertebereiche zugeordnet sind; wobei die Geräuschcharakteristika weiter bevorzugt ausgewählt sind aus der Gruppe umfassend eine Lautstärke bestimmter Frequenzbereiche, insbesondere tiefer, mittlerer und/oder hoher Frequenzbereiche, Pfeiftöne, Lautstärkeschwankungen. Solche Geräuschcharakteristika können technisch schwer erfasst bzw. beziffert werden, stellen aber Geräusche dar, die für Menschen besonders störend sind. Eine Regelung, die diese Geräusche reduziert ist also von Vorteil.

Bevorzugt ist beim Abfragen ein (einzelner) Wertebereich vorgegeben, der die Geräusch-Bewertungsskala bildet. Die Abfrage kann so auf besonders schnelle Art erfolgen.

Gemäß einer weiteren Ausführungsform wird der Gütewert als Lautheit, insbesondere in Sone, bestimmt. Die Lautheit stellt hier eine psychoakustische Maßeinheit (also eine Geräusch-Bewertungsskala) dar, also ein Maß für die von Menschen empfundene subjektive Lautstärke eines Geräusches. Entsprechende Messverfahren sind im Standard ISO 532-1:2017 spezifiziert.

Weitergehend werden bevorzugt Lautstärkepegel und/oder Lautstärkepegelvariationen für bestimmte Frequenzgruppen erfasst und der Gütewert wird basierend darauf bestimmt. Frequenzgruppen sind Frequenzbereiche, die beim menschlichen Hören gemeinsam ausgewertet werden. Eine mögliche Einteilung der Frequenzgruppen ist durch die Bark-Skala gegeben. Bei der Bildung des Gütewerts können Frequenzgruppen, die von Menschen besonders gut wahrgenommen werden höher gewichtet werden.

Eine Kombination von interaktiv ermittelten Bewertungen und gemessenen Werten (d.h. Lautheit und/oder Frequenzgruppen basiert) ist ebenso möglich. Dabei gehen die Bewertungen und gemessenen Werte gewichtet ein, um den Gütewert zu bestimmen.

Die Schritte a) bis e) werden mehrmals durchgeführt, wobei jeweils ein unterschiedlicher Arbeitspunkt ausgewählt wird; und wobei ein Kompensationsparameter-Kennfeld von Arbeitspunkt-Kompensationsparametern basierend auf den Arbeitspunkt-Kompensationsparametern der ausgewählten Arbeitspunkte bestimmt wird.

Durch ein Kompensationsparameter-Kennfeld können jedem Arbeitspunkt Arbeitspunkt-Kompensationsparameter zugeordnet werden, wobei für Arbeitspunkte, die keine ausgewählten Arbeitspunkte sind, die Arbeitspunkt-Kompensationsparameter durch Interpolation oder Ähnliches aus den Arbeitspunkt-Kompensationsparametern benachbarter ausgewählter Arbeitspunkte gewonnen werden können. Das Kompensationsparameter-Kennfeld kann also als Funktion Θ angesehen werden, die jedem Arbeitspunkt (ω, M) entsprechende Kompensationsparameter Θ(ω, M) zuordnet. Zur Bestimmung des Kompensationsparameter-Kennfelds könnte auch ein Regressionsverfahren verwendet werden, in dem die Funktion Θ so bestimmt wird, dass eine Abstandssumme der Funktion zu Arbeitspunkt-Kompensationsparametern ausgewählter Arbeitspunkte minimiert wird.

Vorzugsweise werden die Schritte a) bis e) so oft durchgeführt, bis eine vorbestimmte maximale Anzahl erreicht ist und/oder gegebenenfalls eine Unsicherheit im Kompensationsparameter-Kennfeld kleiner ist als eine vorbestimmte maximale Unsicherheit.

Die Unsicherheit könnte etwa durch den Abstand der Arbeitspunkt-Kompensationsparameter benachbarter ausgewählter (in Schritt a) Arbeitspunkte gegeben sein. Auch könnte die Unsicherheit durch ein im Rahmen einer Interpolation zur Bestimmung des Kennfelds verwendetes Interpolationsverfahren gegebenen sein, etwa die Unsicherheit bzw. Nicht-Eindeutigkeit, wenn die Interpolation von einer in der Interpolation verwendeten Auswahl von benachbarten ausgewählten Arbeitspunkten abhängig ist. Wird ein Regressionsverfahren zur Bestimmung verwendet, kann ein im Rahmen dieses Regressionsverfahrens gebildetes statistisches Maß der Unsicherheit verwendet werden.

Die Auswahl der Arbeitspunkte kann bevorzugt so erfolgen, dass sie gleichmäßig über einen vorgegebenen Arbeitspunkt-Raum verteilt sind.

Der Arbeitspunkt-Raum ist hier der Raum, in dem die Größen, die einen Arbeitspunkt bestimmen, liegen. Dieser kann durch die Angabe von Minimal- und Maximalwerten für diese Größen vorgegeben sein. Beispielsweise kann vorgegeben sein, dass sich die Drehzahl in einem Bereich von einer Minimaldrehzahl ωₘᵢₙ bis zu einer Maximaldrehzahl ωₘₐₓ befindet (ωₘᵢₙ ≤ ω ≤ ωₘₐₓ) und sich das Drehmoment in einem Bereich von einem Minimaldrehmoment Mₘᵢₙ bis zu einem Maximaldrehmoment Mₘₐₓ befindet (Mₘᵢₙ ≤ M ≤ Mₘₐₓ). Selbstverständlich sind auch anders abgegrenzte bzw. charakterisierte Räume bzw. Raumgebiete möglich. Indem die Auswahl der Arbeitspunkte gleichmäßig verteilt über den Arbeitspunkt-Raum erfolgt, kann dieser effizient abgedeckt werden, so dass beispielsweise das Kompensationsparameter-Kennfeld möglichst genau bestimmt werden kann. Eine gleichmäßig verteilte Auswahl kann erreicht werden, indem die Arbeitspunkte eines regelmäßigen Gitters gewählt werden, wobei alle Gitterpunkte, die im Arbeitspunkt-Raum liegen gewählt werden. Auch könnte jeweils ein Punkt im Arbeitspunkt-Raum gewählt werden, der einen maximalen Abstand zu bereits zuvor ausgewählten Arbeitspunkten und zum Rand des Arbeitspunkt-Raums aufweist.

Bevorzugt umfasst das Verfahren weiterhin, während des regulären Betriebs der elektrischen Maschine, ein Verwenden der bestimmten Arbeitspunkt-Kompensationsparameter oder gegebenenfalls des Kompensationsparameter-Kennfelds. Der Ausdruck "regulärer Betrieb" bezieht sich hier auf den tatsächlichen Einsatz der maschinellen Vorrichtung also den laufenden Betrieb im Feld. Es ist auch möglich, das Verfahren zur Geräuschoptimierung während des regulären Betriebs durchzuführen, insbesondere kann die nachfolgend beschriebene Adaption der Arbeitspunkt-Kompensationsparameter während des regulären Betriebs erfolgen, z.B. in regelmäßigen Abständen und/oder auf Veranlassung/Auslösung durch einen Benutzer und/oder durch auftretende Geräusche (z.B. bei einer Geräuschüberwachung).

Bevorzugt ist vorgesehen das Verfahren für einen oder mehrere der ausgewählten Arbeitspunkte erneut durchzuführen und/oder für zusätzlich ausgewählte Arbeitspunkte durchzuführen. Hierbei werden weiter bevorzugt in Schritt b) als anfängliche Kompensationsparameter die zuvor festgelegten Arbeitspunkt-Kompensationsparameter bzw. gegebenenfalls die entsprechenden Arbeitspunkt-Kompensationsparameter des Kompensationsparameter-Kennfelds verwendet. Dadurch wird eine Adaption der harmonische Kompensationsregelung ermöglicht, etwa wenn sich das ausgesendete Geräusch aufgrund von Änderungen oder Alterung der maschinellen Vorrichtung ändert, oder wenn ein anderer Benutzer die maschinelle Vorrichtung verwendet (falls eine interaktive Bewertung durch einen Benutzer vorgesehen ist). Bei der erneuten/zusätzlichen Durchführung des Verfahrens kann die Durchführung unter Verwendung einer anderen Ausführungsform (oder Kombinationen davon) erfolgen als bei der vorherigen Durchführung.

Eine erfindungsgemäße Recheneinheit, z.B. ein Steuergerät eines Kraftfahrzeugs, ist, insbesondere programmtechnisch, dazu eingerichtet, ein erfindungsgemäßes Verfahren durchzuführen.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

Kurze Beschreibung der Zeichnungen
Figur 1 zeigt ein Diagramm, welches die harmonische Kompensation in Abhängigkeit von Kompensationsparametern illustriert;
Figur 2 zeigt ein Ablaufdiagramm des Verfahrens entsprechend einer bevorzugten Ausführungsform der Erfindung; und
Figur 3 zeigt als Beispiel für eine maschinelle Vorrichtung, die eine elektrische Maschine umfasst, ein schematisch dargestelltes, elektrisch angetriebenes Fahrzeug.

### Ausführungsform(en) der Erfindung

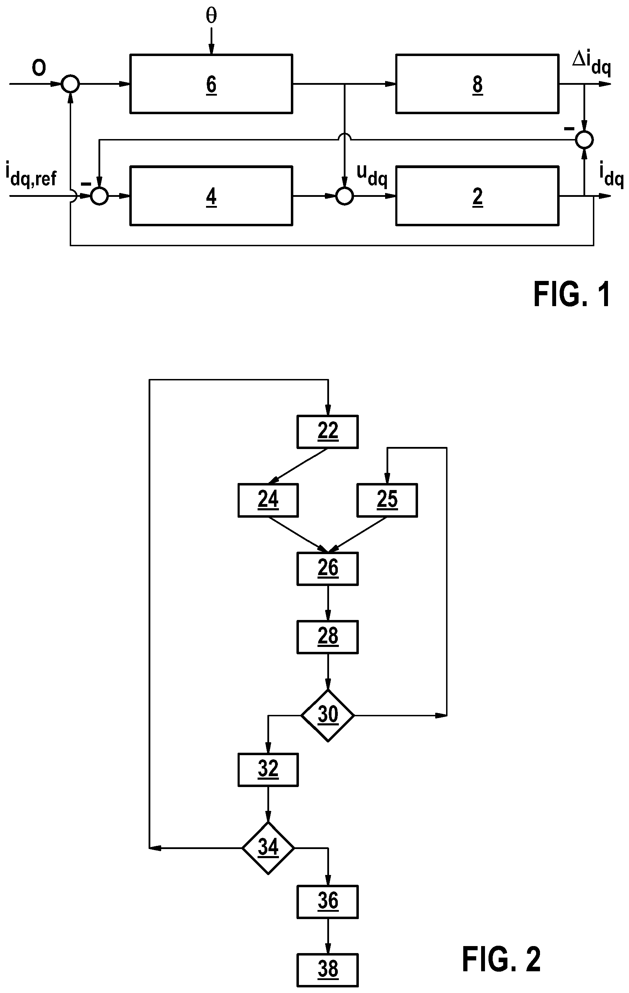

Figur 1 illustriert die harmonische Kompensation in Abhängigkeit von Kompensationsparametern Θ. Dabei wird eine elektrische Maschine 2 mittels einer beispielsweise feldorientierten Regelung 4 geregelt. Die Regelung 4 ist dabei so eingerichtet, dass ein Strom der elektrischen Maschine 2 in d-q-Koordinaten auf einen Referenzstrom i_{dq,ref} eingeregelt wird. Der Referenzstrom i_{dq,ref} ist entsprechend einem Arbeitspunkt der elektrischen Maschine vorgegeben. Dabei bestimmt bzw. berechnet die Regelung 4 eine Steuergröße für die elektrische Maschine 2 basierend auf einer Differenz zwischen dem Referenzstrom und dem (Ist-)Strom der elektrischen Maschine.

Weiter ist eine harmonische Kompensation 6 vorgesehen, die basierend auf einem gemessenen Strom i_{dq} der elektrischen Maschine eine Kompensationssteuergröße bestimmt bzw. berechnet, die zur von der Regelung bestimmten Steuergröße addiert wird, um die Steuergröße u_{dq} zu bilden, mit der die elektrische Maschine 2 angesteuert wird. Die Kompensationssteuergröße wird dabei so bestimmt, dass dem Strom der elektrischen Maschine harmonische Oberwellen aufgeprägt werden, wobei die Größe bzw. die relative Gewichtung von Oberwellen verschiedener Frequenzen durch Kompensationsparameter Θ bestimmt ist.

Aus der Kompensationssteuergröße wird weiterhin mittels eines Δ-Modells, das auf der Stromdynamik der elektrischen Maschine basiert, eine durch die Kompensationssteuergröße bedingte (kleine) Stromänderung Δi_{dq} bestimmt bzw. berechnet. Diese Stromänderung wird vom gemessenen Strom i_{dq} subtrahiert, um den Strom zu erhalten, der vom Referenzstrom subtrahiert wird, um den Differenzstrom zu erhalten, der die Eingangsgröße der Regelung 2 ist. Die durch die harmonische Kompensation bedingte Stromänderung wird also aus dem gemessenen Strom herausgerechnet, um die korrekte Eingangsgröße für die Regelung zu erhalten.

Durch die Stromänderungen kommt es zu kleinen Drehmoment- bzw. Drehzahlvariationen, die, bei geeigneter Wahl, entsprechende durch die elektrische Maschine in der maschinellen Vorrichtung angeregte Schwingungen unterdrücken bzw. deren Anregung entgegenwirken.

Figur 2 stellt ein Ablaufdiagramm des Verfahrens entsprechend einer bevorzugten Ausführungsform der Erfindung dar.

In Schritt 22 wird zunächst ein Arbeitspunkt der elektrischen Maschine ausgewählt, z.B. durch Auswahl einer Drehzahl und eines Drehmoments innerhalb jeweiliger Bereiche. Diese Auswahl kann zufällig oder entsprechend einer Auswahlstrategie erfolgen, z.B. einer solchen, die bei mehrmaliger Durchführung dieses Schrittes (und nachfolgend der weiteren Schritte 24 bis 34) zu gleichmä-βig verteilten Arbeitspunkten führt.

Für den ausgewählten Arbeitspunkt werden in Schritt 24 anfängliche Kompensationsparameter bestimmt, z.B. in zufälliger Weise oder durch Verwendung von Standard-Kompensationsparametern, etwa solcher, die anzeigen, dass keine harmonische Kompensation erfolgt. Auch könnten Arbeitspunkt-Kompensationsparameter benachbarter Arbeitspunkte verwendet werden, wenn für diese bereits Arbeitspunkt-Kompensationsparameter festgelegt wurden. Ebenso ist es möglich, die anfänglichen Kompensationsparameter für den ausgewählten Arbeitspunkt einem bereits gegebenen Kompensationsparameter-Kennfeld zu entnehmen, etwa einem standardmäßig für die maschinelle Vorrichtung oder deren elektrische Maschine vorgegebenen Kennfeld oder einem in einer vorherigen Durchführung des Verfahrens bestimmten Kennfeld.

In Schritt 26 wird die elektrische Maschine betrieben, wobei die anfänglichen Kompensationsparameter bzw. bei wiederholter Durchführung dieses Schrittes die geänderten Kompensationsparameter in der Kompensationsregelung verwendet werden. Dies führt zu einem Maschinengeräusch, das durch die elektrische Maschine und durch in der maschinellen Vorrichtung, in der die elektrische Maschine eingebaut ist, durch den Betrieb der elektrischen Maschine angeregte Schwingungen erzeugt wird.

In Schritt 28 wird ein Gütewert entsprechend einer vorgegebenen Geräusch-Bewertungsskala bestimmt. Dies erfolgt basierend auf dem von der maschinellen Vorrichtung während des Betriebs der elektrischen Maschine ausgesendeten Geräuschs, d.h. basierend auf dem Maschinengeräusch. Die Geräusch-Bewertungsskala kann eine messtechnisch erfassbare Geräuschskala sein, wobei der Lautstärkepegel und/oder Lautstärkepegelvariationen bestimmter Frequenzen oder Frequenzbereiche (Frequenzgruppen) gemessen werden und nach einer eventuellen Normierung als Gütewert verwendet werden. Wird eine messtechnisch erfassbare Geräuschskala verwendet, kann das Verfahren automatisiert durchgeführt werden, insbesondere auch während des regulären Betriebs der maschinellen Vorrichtung.

Bevorzugt ist vorgesehen, den Gütewert in einem interaktiven Verfahren zu bestimmen, wobei von einem menschlichen Benutzer, der das Betriebsgeräusch der maschinellen Vorrichtung hört, eine oder mehrere Bewertungen abgefragt werden und auf Grundlage dieser Bewertungen dann der Gütewert gebildet wird. Die Bewertungen werden als Werte innerhalb eines oder mehrerer kontinuierlicher und/oder diskreter Wertebereiche abgefragt, wobei insbesondere jeder Bewertung ein Wertebereich entspricht. Kontinuierliche Wertebereiche sind typischerweise Wertebereiche, die sich über ein bestimmtes Intervall der reellen Zahlen erstrecken, z.B. von -1 bis 1 oder von 0 bis 1, wobei natürlich auch jedes andere Intervall denkbar ist. Der Benutzer könnte etwa gefragt werden, wie unangenehm/angenehm er das Betriebsgeräusch empfindet, wobei der Benutzer die Antwort auf einer Skala von -1 (= maximal unangenehm) bis 1 (= maximal angenehm) angibt. Diskrete Wertebereiche können typischerweise nur endlich viele voneinander verschiedene Werte annehmen, z.B. alle natürlichen Zahlen von 1 bis 5, oder auch nur zwei Werte (etwa 0, 1; entsprechend "schlecht"/"gut" oder "ja"/"nein"). Es könnte etwa abgefragt werden, ob der Benutzer einen Pfeifton wahrnimmt (ja/nein).

Die eine oder mehreren abgefragten Bewertungen werden dann auf eine Geräusch-Bewertungsskala abgebildet. Im einfachsten Fall, wenn nur ein kontinuierlicher Wertebereich gegeben ist, kann dieser selbst die Geräusch-Bewertungsskala bilden (im obigen Beispiel mit den Bewertungen unangenehm/angenehm wäre dann die Skala von -1 bis +1, wobei ein höherer Wert ein besserer Gütewert ist). Bei mehreren Bewertungen kann beispielsweise eine gewichtete Summe dieser Bewertungen als Gütewert genommen werden und die Geräusch-Bewertungsskala entsprechend definiert werden. Hierbei entsprechen unterschiedliche Gewichte einer unterschiedlichen Normierung der Bewertungen oder einer unterschiedlich starken Berücksichtigung der entsprechenden Bewertungen. Die Gewichte können unterschiedliche Vorzeichen aufweisen, um zu berücksichtigen, dass unterschiedliche Bewertungen bezüglich einem besseren/schlechteren Geräusch unterschiedliche numerische Richtungen aufweisen können.

In Schritt 30 wird, im Falle des beispielhaft angenommen Optimierungsverfahrens bei der Bestimmung geänderter Kompensationsparameter, geprüft, ob ein Lernfortschritt kleiner als eine vorgegebene Gütelernschwelle ist, ob also ein bester Gütewert oder dessen Nähe erreicht ist, so dass mit geänderten Kompensationsparameter keine wesentliche Änderung bzw. Verbesserung des Gütewerts erreicht wird. Wenn dies nicht der Fall ist, wenn also der Lernfortschritt größer oder gleich der Gütelernschwelle ist, wird das Verfahren mit Schritt 25, nämlich dem Bestimmen geänderter Kompensationsparameter, fortgesetzt.

In Schritt 25, der hier parallel zu Schritt 24 eingezeichnet ist, werden geänderte Kompensationsparameter bestimmt, wobei bereits für andere Kompensationsparameter bestimmte Gütewerte berücksichtigt werden. Die geänderten Kompensationsparameter werden also basierend auf den bereits bestimmten Gütewerten bestimmt. Hierbei wird in der gezeigten Ausführungsform beispielhaft ein Optimierungsverfahren verwendet, d.h. ein Verfahren in dem versucht wird Kompensationsparameter so zu finden, dass der Gütewert optimal ist, also die Kompensationsparameter mit dem besten Gütewert gefunden werden. Es werden dabei ausgehend von den bereits verwendeten Kompensationsparametern und den zugehörigen Gütewerten geänderte Kompensationsparameter bestimmt. Insbesondere kann ein Gradientenverfahren verwendet werden. Nach Schritt 25 wird das Verfahren, mit den geänderten Kompensationsparametern, wieder mit Schritt 26 fortgesetzt, es wird also eine Schleife gebildet.

Wenn andererseits in Schritt 30 festgestellt wird, dass der Lernfortschritt kleiner als die Gütelernschwelle ist, d.h. wenn festgestellt wird, dass sich der Gütewert der derzeitigen Kompensationsparameter um weniger als die Gütelernschwelle von einem besten Gütewert der vorherigen Kompensationsparameter unterscheidet, wird mit Schritt 32 fortgefahren. Im Prinzip kann bei dieser Prüfung auch geprüft werden, ob die Gütewerte mehrerer aufeinanderfolgender im Rahmen der durch die Schritte 25 bis 30 gebildeten Schleife angenommener Kompensationsparameter um weniger als die Gütelernschwelle von einem vorher besten Gütewert der vorherigen Kompensationsparameter unterscheiden. So wird sichergestellt, dass eine zwischenzeitliche Verlangsamung der Konvergenz des Optimierungsverfahrens nicht zu einem Abbruch führt.

Alternativ oder zusätzlich zu der Prüfung, ob die Gütelernschwelle unterschritten wird, kann auch geprüft werden, ob die Schleife der Schritte 25 bis 30 bestimmte Anzahl mal durchgeführt wurde, und, wenn dies der Fall ist, mit Schritt 32 fortgefahren werden.

In Schritt 32 werden für den ausgewählten Arbeitspunkt Arbeitspunkt-Kompensationsparameter festgelegt. Dabei werden Kompensationsparameter einer Durchführung der Schleife der Schritte 25 bis 30 verwendet, deren zugehöriger, in Schritt 28 bestimmter Gütewert sich um maximal eine vorgegebene Güteschranke von einem besten Gütewert der Durchführungen der Schleife unterscheidet. Bevorzugt werden die Kompensationsparameter mit dem besten Gütewert verwendet.

In Schritt 34 wird geprüft, ob das vorstehend beschriebene Verfahren für weitere Arbeitspunkte durchgeführt werden soll. Wenn ja, wird mit Schritt 22 fortgefahren, wobei in diesem ein Arbeitspunkt ausgewählt wird, der zuvor noch nicht ausgewählt wurde. Wenn nein, wird mit Schritt 36, dem Bestimmen eines Kompensationsparameter-Kennfelds der Arbeitspunkt-Kompensationsparameter, fortgefahren, der alternativ oder zusätzlich, anders als gezeichnet, auch vor Schritt 34 erfolgen kann. Spezifisch kann in Schritt 34 geprüft werden, ob für eine vorgegebene maximale Anzahl von ausgewählten Arbeitspunkten Arbeitspunkt-Kompensationsparameter festgelegt wurden. Ebenso oder zusätzlich kann, vorausgesetzt Schritt 36 wird vor Schritt 34 ausgeführt, geprüft werden, ob eine Unsicherheit im Kompensationsparameter-Kennfeld kleiner ist als eine vorbestimmte maximale Unsicherheit. Die Unsicherheit ist typischerweise im Rahmen des bei der Bestimmung des Kennfelds verwendeten Verfahrens gegeben.

In Schritt 36, der auch vor Schritt 34 erfolgen kann, wird das Kompensationsparameter-Kennfeld bestimmt, d.h. es wird, basierend auf den bestimmten Arbeitspunkt-Kompensationsparametern für die ausgewählten Arbeitspunkte eine Abbildung Θ bestimmt, die allen Arbeitspunkten (ω, M) (nicht nur den ausgewählten Arbeitspunkten) jeweilige Arbeitspunkt-Kompensationsparameter Θ(ω, M) zuordnet. Die Regelung der elektrischen Maschine, Schritt 38, erfolgt dann unter Verwendung des Kompensationsparameter-Kennfelds, d.h. wenn die elektrische Maschine an einem Arbeitspunkt betrieben wird, werden in der Kompensationsregelung die diesem im Kompensationsparameter-Kennfeld zugeordneten Arbeitspunkt-Kompensationsparameter verwendet.

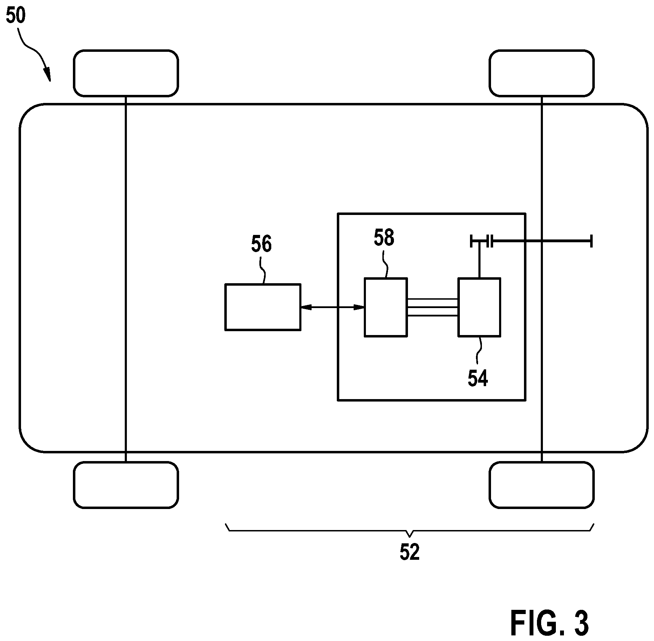

Figur 3 zeigt als Beispiel für eine maschinelle Vorrichtung, die eine elektrische Maschine umfasst, ein schematisch dargestelltes Fahrzeug 50 mit einem elektrischen Antriebsstrang 52. Der Antriebsstrang 52 umfasst eine elektrische Maschine 54 und eine Regeleinrichtung 56, etwa ein Steuergerät, das eingerichtet ist, ein erfindungsgemäßes Verfahren zur Geräuschoptimierung bzw. zur Regelung auszuführen. Die Leistungsansteuerung der elektrischen Maschine 54 erfolgt über Inverter 58. Die Darstellung zeigt beispielhaft ein Fahrzeug mit vier Rädern, wobei die Erfindung gleichermaßen in beliebigen Fahrzeugen mit einer beliebigen Anzahl an Rädern zu Lande, zu Wasser und in der Luft einsetzbar ist.

Selbstverständlich kann die Erfindung auch zur Geräuschoptimierung einer maschinellen Vorrichtung, die eine elektrische Maschine umfasst, Anwendung finden, die kein Fahrzeug ist. Etwa in einer Maschine, die in einer industriellen Anlage installiert ist. Auch kann die maschinelle Vorrichtung nur aus der elektrischen Maschine selbst (und ihrer Ansteuerung) bestehen, so dass eine Geräuschoptimierung der elektrischen Maschine selbst vorgenommen werden kann.

## Patentansprüche

1. Verfahren zur Geräuschoptimierung einer maschinellen Vorrichtung (50), die eine elektrische Maschine (2, 54) umfasst, die durch eine Regelung (4) geregelt wird, die eine harmonische Kompensationsregelung (6) aufweist, wobei die folgenden Schritte ein oder mehrmals durchgeführt werden:
a) Auswählen (22) eines Arbeitspunktes der elektrischen Maschine;
mehrfache Durchführung der folgenden Schritte b) bis d):
b) Bestimmen (24, 25) von Kompensationsparametern der harmonischen Kompensationsregelung für den ausgewählten Arbeitspunkt, wobei bei der ersten Durchführung der Schritte b) bis d) anfängliche Kompensationsparameter bestimmt werden und bei den weiteren Durchführungen jeweils geänderte Kompensationsparameter basierend auf bestimmten Gütewerten bestimmt werden;
c) Betreiben (26) der elektrischen Maschine, wobei die elektrische Maschine unter Verwendung der Kompensationsparameter geregelt wird;
d) Bestimmen (28) eines Gütewertes entsprechend einer vorgegebenen Geräusch-Bewertungsskala basierend auf dem Maschinengeräusch während des Betriebs der elektrischen Maschine;
e) Festlegen (32) von Arbeitspunkt-Kompensationsparametern für den ausgewählten Arbeitspunkt, wobei Kompensationsparameter einer Durchführung der Schritte b) bis d) verwendet werden, deren Gütewert sich um maximal eine Güteschranke von einem besten Gütewert der Durchführungen unterscheidet;
wobei Schritt d) umfasst:
Abfragen einer oder mehrerer Bewertungen des Geräusches innerhalb eines oder mehrerer kontinuierlicher und/oder diskreter Wertebereiche von einem menschlichen Benutzer; und
Bestimmen des Gütewertes basierend auf den abgefragten Bewertungen;
**dadurch gekennzeichnet, dass** die Schritte a) bis e) mehrmals durchgeführt werden, wobei jeweils ein unterschiedlicher Arbeitspunkt ausgewählt wird; und wobei ein Kompensationsparameter-Kennfeld von Arbeitspunkt-Kompensationsparametern basierend auf den Arbeitspunkt-Kompensationsparametern der ausgewählten Arbeitspunkte bestimmt wird (36).

2. Verfahren nach Anspruch 1, wobei die Bestimmung geänderter Kompensationsparameter in Schritt b) unter Verwendung eines Optimierungsverfahrens, insbesondere eines Gradientenverfahrens, erfolgt; wobei bevorzugt die wiederholte Durchführung der Schritte b) bis d) beendet wird, wenn sich der Gütewert einer Durchführung oder die Gütewerte mehrerer aufeinanderfolgender Durchführungen um weniger als eine Gütelernschwelle von einem vorher besten Gütewert der vorherigen Durchführungen unterscheidet bzw. unterscheiden.

3. Verfahren nach einem der vorstehenden Ansprüche, wobei in Schritt d) beim Abfragen die Wertebereiche auf einer Anzeige angezeigt werden und die Bewertungen mittels eines Eingabegeräts vom Benutzer erhalten werden.

4. Verfahren nach einem der vorhergehenden Ansprüche, wobei beim Abfragen bestimmte Geräuschcharakteristika abgefragt werden, denen die Wertebereiche zugeordnet sind; wobei die Geräuschcharakteristika bevorzugt ausgewählt sind aus: Lautstärke bestimmter Frequenzbereiche, insbesondere tiefer, mittlerer und/oder hoher Frequenzbereiche, Pfeiftöne, Lautstärkeschwankungen.

5. Verfahren nach einem der vorhergehenden Ansprüche, wobei beim Abfragen ein Wertebereich vorgegeben ist, der die Geräusch-Bewertungsskala bildet.

6. Verfahren nach einem der Ansprüche einem der vorstehenden Ansprüche, wobei der Gütewert als Lautheit, insbesondere in Sone, bestimmt wird.

7. Verfahren nach einem der Ansprüche einem der vorstehenden Ansprüche, wobei Lautstärkepegel und/oder Lautstärkepegelvariationen für bestimmte Frequenzgruppen erfasst werden und der Gütewert basierend darauf bestimmt wird.

8. Verfahren nach einem der vorstehenden Ansprüche, wobei die Schritte a) bis e) so oft durchgeführt werden, bis eine vorbestimmte maximale Anzahl erreicht ist.

9. Verfahren nach einem der vorstehenden Ansprüche 8, wobei die Auswahl der Arbeitspunkte so erfolgt, dass sie gleichmäßig über einen vorgegebenen Arbeitspunkt-Raum verteilt sind.

10. Verfahren nach einem der vorstehenden Ansprüche, umfassend, während des regulären Betriebs der elektrischen Maschine, Verwenden (38) der Arbeitspunkt-Kompensationsparameter.

11. Verfahren nach einem der vorstehenden Ansprüche, wobei die Schritte nach einem der vorstehenden Ansprüche für einen oder mehrere der ausgewählten Arbeitspunkte erneut durchgeführt und/oder für zusätzlich ausgewählte Arbeitspunkte durchgeführt werden; wobei bevorzugt in Schritt b) als anfängliche Kompensationsparameter jeweils die zuvor festgelegten Arbeitspunkt-Kompensationsparameter verwendet werden.

12. Recheneinheit, die dazu eingerichtet ist, alle Verfahrensschritte eines Verfahrens nach einem der vorstehenden Ansprüche durchzuführen.

13. Computerprogramm, umfassend Befehle, das eine Recheneinheit dazu veranlasst, alle Verfahrensschritte eines Verfahrens nach einem der Ansprüche 1 bis 11 durchzuführen, wenn es auf der Recheneinheit ausgeführt wird.

14. Maschinenlesbares Speichermedium mit einem darauf gespeicherten Computerprogramm nach Anspruch 13.

## Claims

1. Method for optimizing the noise of a mechanical device (50) comprising an electric machine (2, 54) controlled by a controller (4) that has a harmonic compensation controller (6), wherein the following steps are performed one or more times:
a) selecting (22) an operating point of the electric machine;
performing the following steps b) to d) multiple times:
b) determining (24, 25) compensation parameters of the harmonic compensation controller for the selected operating point, the first performance of steps b) to d) resulting in initial compensation parameters being determined, and each of the additional performances resulting in modified compensation parameters being determined on the basis of specific quality values;
c) operating (26) the electric machine, the electric machine being controlled using the compensation parameters;
d) determining (28) a quality value according to a specified noise rating scale on the basis of the machine noise during operation of the electric machine;
e) defining (32) operating point compensation parameters for the selected operating point, compensation parameters from a performance of steps b) to d) whose quality value differs from a best quality value of the performances by no more than a quality limit being used;
step d) comprising:
requesting one or more ratings of the noise within one or more continuous and/or discrete value ranges from a human user; and
determining the quality value on the basis of the requested ratings;
**characterized in that** steps a) to e) are performed multiple times, a different operating point being selected each time; and a compensation parameter map of operating point compensation parameters being determined (36) on the basis of the operating point compensation parameters of the selected operating points.

2. Method according to Claim 1, wherein modified compensation parameters are determined in step b) using an optimization method, in particular a gradient method, the repeated performance of steps b) to d) preferably being terminated if the quality value of one performance or the quality values of multiple successive performances differs or differ from a previously best quality value of the previous performances by less than a quality learning threshold.

3. Method according to either of the preceding claims, wherein the requesting in step d) involves the value ranges being displayed on a display and the ratings being obtained from the user by means of an input device.

4. Method according to one of the preceding claims, wherein the requesting involves specific noise characteristics with which the value ranges are associated being requested; the noise characteristics preferably being selected from: volume of specific frequency ranges, in particular low, medium and/or high frequency ranges, whistling tones, volume fluctuations.

5. Method according to one of the preceding claims, wherein the requesting has a specified value range that forms the noise rating scale.

6. Method according to one of claims one of the preceding claims, wherein the quality value is determined as a loudness, in particular in sones.

7. Method according to one of claims one of the preceding claims, wherein volume level and/or volume level variations are recorded for specific frequency groups and the quality value is determined on the basis thereof.

8. Method according to one of the preceding claims, wherein steps a) to e) are repeated until a predetermined maximum number is reached.

9. Method according to one of the preceding claims 8, wherein the operating points are selected in such a way that they are evenly distributed over a specified operating point space.

10. Method according to one of the preceding claims, comprising using (38) the operating point compensation parameters during regular operation of the electric machine.

11. Method according to one of the preceding claims, wherein the steps according to one of the preceding claims are performed afresh for one or more of the selected operating points and/or are performed for additionally selected operating points; step b) preferably involving the respective previously defined operating point compensation parameters being used as initial compensation parameters.

12. Computing unit designed to perform all of the method steps of a method according to one of the preceding claims.

13. Computer program, comprising commands, which causes a computing unit to perform all of the method steps of a method according to one of Claims 1 to 11 when it is executed on the computing unit.

14. Machine-readable storage medium with a computer program according to Claim 13 stored thereon.

## Revendications

1. Procédé d'optimisation du bruit d'un dispositif mécanique (50) comprenant une machine électrique (2, 54) qui est régulée par un dispositif de régulation (4) qui comporte un dispositif de régulation de compensation d'harmoniques (6), les étapes suivantes étant exécutées une ou plusieurs fois :
a) la sélection (22) d'un point de fonctionnement de la machine électrique ;
l'exécution répétée des étapes b) à d) suivantes :
b) la détermination (24, 25) de paramètres de compensation du dispositif de régulation de compensation d'harmoniques pour le point de fonctionnement sélectionné, des paramètres de compensation initiaux étant déterminés lors de la première exécution des étapes b) à d) et des paramètres de compensation modifiés étant déterminés respectivement lors des autres exécutions sur la base de valeurs de qualité déterminées ;
c) la mise en fonctionnement (26) de la machine électrique, la machine électrique étant régulée à l'aide des paramètres de compensation;
d) la détermination (28) d'une valeur de qualité correspondant à une échelle d'évaluation du bruit prédéfinie sur la base du bruit de la machine pendant le fonctionnement de la machine électrique ;
e) la définition (32) de paramètres de compensation de point de fonctionnement pour le point de fonctionnement sélectionné, des paramètres de compensation d'une exécution des étapes b) à d) étant utilisés, dont la valeur de qualité diffère au maximum d'une limite de qualité d'une meilleure valeur de qualité des exécutions ;
l'étape d) comprenant :
la demande d'une ou de plusieurs évaluations du bruit à un utilisateur humain à l'intérieur d'une ou de plusieurs plages de valeurs continues et/ou discrètes ; et
la détermination de la valeur de qualité sur la base des évaluations demandées ;
**caractérisé en ce que** les étapes a) à e) sont exécutées plusieurs fois, un point de fonctionnement différent étant sélectionné respectivement, et un diagramme caractéristique de paramètres de compensation constitué de paramètres de compensation de points de fonctionnement étant déterminé (36) sur la base des paramètres de compensation des points de fonctionnement sélectionnés.

2. Procédé selon la revendication 1, **caractérisé en ce que** la détermination de paramètres de compensation modifiés à l'étape b) est effectuée en utilisant un procédé d'optimisation, en particulier un procédé du gradient ; dans lequel, de préférence, l'exécution répétée des étapes b) à d) est interrompue si la valeur de qualité d'une exécution ou les valeurs de qualité de plusieurs exécutions successives diffèrent de moins d'un seuil d'apprentissage de qualité d'une valeur de qualité précédemment meilleure des exécutions précédentes.

3. Procédé selon l'une quelconque des revendications précédentes, dans lequel, à l'étape d), lors de la demande, les plages de valeurs sont affichées sur un écran et les évaluations sont obtenues de l'utilisateur au moyen d'un dispositif de saisie.

4. Procédé selon l'une quelconque des revendications précédentes, dans lequel, lors de la demande, des caractéristiques de bruit particulières auxquelles sont associées les plages de valeurs sont demandées ; les caractéristiques de bruit étant sélectionnées de préférence parmi : le volume sonore de certaines plages de fréquences, en particulier de plages de fréquences basses, moyennes et/ou hautes, des tonalités de sifflement, des fluctuations de volume sonore.

5. Procédé selon l'une quelconque des revendications précédentes, dans lequel, lors de la demande, une plage de valeurs qui forme l'échelle d'évaluation du bruit est prédéfinie.

6. Procédé selon l'une quelconque des revendications l'une quelconque des revendications précédentes, dans lequel la valeur de qualité est déterminée en tant qu'intensité sonore, en particulier en son.

7. Procédé selon l'une quelconque des revendications l'une quelconque des revendications précédentes, dans lequel des niveaux de volume sonore et/ou des variations de niveau de volume sonore sont acquis pour des groupes de fréquences spécifiques et la valeur de qualité est déterminée sur la base de ceux-ci.

8. Procédé selon l'une quelconque des revendications précédentes, dans lequel les étapes a) à e) sont exécutées jusqu'à ce qu'un nombre maximal prédéterminé soit atteint.

9. Procédé selon l'une quelconque des revendications 8 précédentes, dans lequel la sélection des points de fonctionnement est effectuée de telle sorte qu'ils soient répartis uniformément sur un espace de points de fonctionnement prédéterminé.

10. Procédé selon l'une quelconque des revendications précédentes, comprenant, pendant le fonctionnement normal de la machine électrique, l'utilisation (38) des paramètres de compensation de point de fonctionnement.

11. Procédé selon l'une quelconque des revendications précédentes, **caractérisé en ce que** les étapes selon l'une quelconque des revendications précédentes sont à nouveau exécutées pour un ou plusieurs des points de fonctionnement sélectionnés et/ou sont exécutées pour des points de fonctionnement additionnels sélectionnés ; les paramètres de compensation de point de fonctionnement préalablement définis étant respectivement utilisés, de préférence à l'étape b), en tant que paramètres de compensation initiaux.

12. Unité de calcul conçue pour exécuter toutes les étapes de procédé d'un procédé selon l'une quelconque des revendications précédentes.

13. Programme informatique comprenant des instructions qui amènent une unité de calcul à exécuter toutes les étapes de procédé d'un procédé selon l'une quelconque des revendications 1 à 11, lorsqu'il est exécuté sur l'unité de calcul.

14. Support d'enregistrement lisible par machine, sur lequel est enregistré un programme informatique selon la revendication 13.
